# DEMANDE DE BREVET EUROPEEN

(11) **EP 1 433 660 A1**
(43) Date de publication de la demande: **30.06.2004**
(21) Numéro de dépôt: 03293157.8
(22) Date de dépôt: 15.12.2003
(51) Int. Cl.: B60R 5/04, D04H 5/06

(54) **Bande textile calandrée pour cache-bagages de véhicule automobile**

(30) Priorité: 20.12.2002 FR 0216389
(71) Demandeur: Centre d'Etude et de Recherche pour l'Automobile ( CERA), 51100 Reims (FR)
(72) Inventeur: Damotte, Alain, 51100 Reims (FR); Bayle, André Xavier, 51100 Reims (FR); Montagne, Frédéric, 51150 Tours sur Marne (FR)
(74) Mandataire: Geismar, Thierry

(57) **Abrégé**

L'invention concerne un cache-bagages pour véhicule automobile comprenant un rideau enroulable formé d'une bande textile (2), ladite bande comprenant une nappe de fibres sous la forme d'un non tissé calandré à chaud, au moins une partie des fibres de la nappe étant thermofusibles, ledit cache-bagages comprenant en outre des moyens d'enroulement (3) du rideau et des moyens de préhension (4) du rideau, les moyens d'enroulement (3) étant fixés au voisinage d'une première partie extrême de ladite bande et les moyens de préhension (4) étant fixés au voisinage d'une deuxième partie extrême de ladite bande, opposée à ladite première partie extrême.

L'invention concerne également un procédé de réalisation de la bande textile (2) d'un tel cache-bagages.

## Description

L'invention concerne un cache-bagages pour véhicule automobile comprenant un rideau enroulable formé d'une bande textile et un procédé de réalisation de la bande textile d'un tel cache-bagages.

Dans les véhicules de type "monospace", "break" ou « utilitaire », un large espace est disponible pour les bagages à l'arrière du véhicule. Cet espace peut être utilisé pour le rangement des bagages soit en totalité, soit jusqu'au niveau médian, correspondant à peu près au bas des vitres du véhicule, c'est à dire un peu en dessous du haut du dossier des sièges.

Dans ce dernier cas, il peut être utile de cacher les bagages à la vue des personnes passant devant le véhicule, notamment dans le but d'éviter de tenter d'éventuels voleurs.

Pour ce faire, il est connu d'utiliser un rideau enroulable masquant les bagages lorsqu'il est déroulé. Ces rideaux sont classiquement réalisés à partir d'un textile enduit de PVC, le textile assurant la tenue mécanique et le PVC grainé assurant un bon aspect extérieur au rideau. Ils peuvent également être réalisés à partir d'un textile avec enduction sur son envers, l'enduction et le textile assurant la tenue mécanique du rideau.

Cependant, le PVC ou les matériaux employés sont difficilement recyclables. D'autre part, la manoeuvre du rideau ou les vibrations du véhicule en fonctionnement provoquent des bruits de frottement dus au PVC ou à l'enduction. Enfin, le PVC ou l'enduction ajoute une masse supplémentaire au cache-bagages alors que l'industrie automobile s'efforce de réduire la masse des véhicules.

L'invention vise à pallier ces inconvénients en proposant une bande textile pour rideau enroulable qui est réalisée de manière à assurer par elle-même sa tenue mécanique sans nécessité d'ajouter de PVC ou tout autre matériau, et ce en présentant un aspect très satisfaisant dans le cadre de son application, par exemple un aspect tissu ou un aspect structuré.

A cet effet, selon un premier aspect, l'invention concerne un cache-bagages pour véhicule automobile comprenant un rideau enroulable formé d'une bande textile, ladite bande comprenant une nappe de fibres sous la forme d'un non tissé calandré à chaud, au moins une partie des fibres de la nappe étant thermofusibles, ledit cache-bagages comprenant en outre des moyens d'enroulement du rideau et des moyens de préhension du rideau, les moyens d'enroulement étant fixés au voisinage d'une première partie extrême de ladite bande et les moyens de préhension étant fixés au voisinage d'une deuxième partie extrême de ladite bande, opposée à ladite première partie extrême.

Selon un deuxième aspect, l'invention concerne un procédé de réalisation de la bande textile d'un tel cache-bagages comprenant les étapes consistant à :
- former une nappe de fibres sous la forme d'un non tissé dont au moins une partie des fibres sont thermofusibles ;
- calandrer à chaud la nappe de fibres de sorte à provoquer une fusion des fibres thermofusibles.

D'autres objets et avantages de l'invention apparaîtront au cours de la description qui suit, faite en référence au dessin annexé qui est une représentation en perspective d'un cache-bagages selon l'invention.

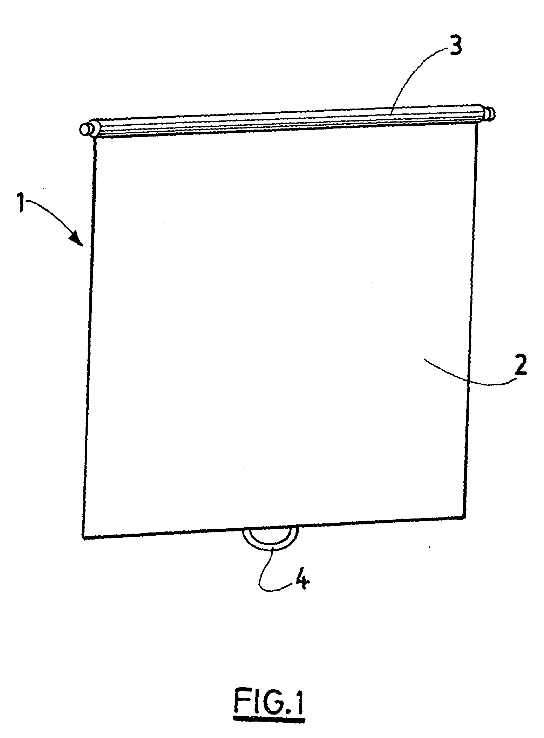

Le cache-bagages 1 représenté sur la figure 1 comprend un rideau enroulable formé d'une bande textile 2, des moyens d'enroulement 3 et des moyens de préhension 4.

Les moyens d'enroulement 3 sont, par exemple, un enrouleur à ressort connu en lui-même. Ces moyens 3 sont fixés au voisinage d'une première partie extrême de la bande textile 2.

Les moyens de préhension 4 sont, par exemple, une poignée apte à être accrochée à un point fixe du véhicule automobile. Ces moyens 4 sont fixés au voisinage d'une seconde partie extrême de la bande textile 2 opposée à la première partie extrême.

Un tel cache-bagages est par exemple fixé au niveau médian d'un véhicule derrière la deuxième rangée de sièges ou, s'il n'existe pas de deuxième rangée, derrière la plage fixe située juste derrière la rangée de sièges. Un point fixe au niveau de la plage arrière du véhicule permet d'accrocher les moyens de préhension et de maintenir le rideau tendu de façon à masquer l'espace du compartiment bagage compris entre l'arrière et la deuxième rangée de sièges ou la plage fixe du véhicule.

La bande textile 2 peut être en harmonie avec les pièces environnantes (telles que la tablette, les moyens d'enroulement 3 ou les moyens de préhension 4), c'est-à-dire qu'elles présentent le même aspect et/ou la même couleur et/ou le même grain.

La bande textile 2 comprend une nappe de fibres réalisée sous la forme d'un non tissé. Une partie des fibres de la nappe est thermofusible. Le procédé de réalisation de la bande textile 2 est décrit ci-dessous.

La nappe de fibres est réalisée sous la forme d'un non tissé. Ce non tissé est lié par exemple par aiguilletage ou par jet d'eau. La nappe peut comprendre de 3 à 20% de fibres thermofusibles, le reste des fibres étant par exemple des fibres textiles synthétiques ou naturelles usuellement employées dans ce type d'application. En particulier, le titre des fibres utilisées peut être inférieur à 33 dtex pour, de par leur relative finesse, améliorer l'aspect de la nappe.

La nappe est ensuite calandrée à une température suffisante pour renforcer la cohésion de la nappe par fusion des fibres thermofusibles. La nappe ainsi réalisée répond aux cahiers des charges généralement requis dans l'industrie automobile, notamment en ce qui concerne la tenue à l'abrasion, au pochage, à la combustibilité et à l'endurance.

En particulier, l'allongement dans le sens longitudinal et transversal de la nappe sous 10 daN peut être rendu inférieur à 15% de sorte à être conforme à la norme ISO 9073-3, et le poids surfacique de la nappe peut être rendu compris entre 50 g/m² et 700 g/m² pour être conforme à la norme ISO 9073-1.

Selon une variante, le non tissé est un textile commercialisé sous le nom de "MALIVLIES" qui présente sur une de ses faces, à savoir la face visible depuis l'habitacle du véhicule, un aspect tricoté. Dans ce cas, la nappe de fibres est d'abord obtenue par cardage/nappage puis elle est tricotée en surface à l'aide d'un banc d'aiguilles. Les aiguilles sont agencées pour former des points de chaînette avec les fibres de la nappe. De cette manière, l'aspect maille obtenu est apparent sur une seule face de la nappe de fibres. Cette nappe est ensuite calandrée à chaud pour former la bande textile 2.

Selon une autre variante, le non tissé est un textile commercialisé sous le nom de "MALIWATT". Dans ce cas, des fils, naturels ou synthétiques, sont insérés de part en part de la nappe dans le sens chaîne lors de l'aiguilletage et sont espacés de façon régulière sur la nappe. La fréquence des points est cadencée ou non pour la création d'un motif d'aspect uni ou de différentes couleurs. La nappe est ensuite calandrée à chaud pour former la bande textile 2.

Selon une autre variante, le non tissé est un textile commercialisé sous le nom de « MALIVLIES DILOURE ». Dans ce cas, le « MALIVLIES » décrit ci-dessus a subi une seconde opération d'aiguilletage avant calandrage à chaud. La face visible depuis l'habitacle de véhicule présente toujours un aspect tricoté, associé à un aspect velours rendant le coloris mat. De plus, la tenue mécanique de la nappe est améliorée.

Une bande textile 2 selon l'invention, permet une baisse importante de la masse du cache-bagages par rapport à une bande comprenant une enduction au PVC.

## Revendications

1. Cache-bagages pour véhicule automobile, **caractérisé en ce qu'**il comprend un rideau enroulable formé d'une bande textile (2), ladite bande comprenant une nappe de fibres sous la forme d'un non tissé calandré à chaud, au moins une partie des fibres de la nappe étant thermofusibles, ledit cache-bagages comprenant en outre des moyens d'enroulement (3) du rideau et des moyens de préhension (4) du rideau, les moyens d'enroulement (3) étant fixés au voisinage d'une première partie extrême de ladite bande et les moyens de préhension (4) étant fixés au voisinage d'une deuxième partie extrême de ladite bande, opposée à ladite première partie extrême.

2. Cache-bagages selon la revendication 1, **caractérisé en ce que** les moyens d'enroulement (3) du rideau sont un enrouleur à fonction ressort et les moyens de préhension (3) du rideau sont une poignée.

3. Cache-bagages selon la revendication 1 ou 2, **caractérisé en ce que** la nappe présente un aspect tricoté sur une de ses faces.

4. Cache-bagages selon la revendication 3, **caractérisé en ce que** la nappe présente en outre un aspect velours sur la face d'aspect tricoté.

5. Cache-bagages selon la revendication 1 ou 2, **caractérisé en ce que** des fils sont insérés de part en part de la nappe dans le sens chaîne lors de l'aiguilletage, lesdits fils étant espacés de façon régulière sur la nappe.

6. Cache-bagages selon l'une quelconque des revendications 1 à 5, **caractérisé en ce que** la nappe comprend 3 à 20% de fibres thermofusibles.

7. Procédé de réalisation de la bande textile d'un cache-bagages selon l'une quelconque des revendications 1 à 6, **caractérisé en ce qu'**il comprend les étapes consistant à :
- former une nappe de fibres sous la forme d'un non tissé dont au moins une partie des fibres sont thermofusibles ;
- calandrer à chaud la nappe de fibres de sorte à provoquer une fusion des fibres thermofusibles.

8. Procédé selon la revendication 7, **caractérisé en ce que** la nappe de non tissé est liée par aiguilletage.

9. Procédé selon la revendication 7, **caractérisé en ce que** la nappe de non tissé est liée par jet d'eau.
